# EUROPEAN PATENT APPLICATION

(11) **EP 1 166 678 A1**
(43) Date of publication of application: **02.01.2002**
(21) Application number: 01115239.4
(22) Date of filing: 22.06.2001
(51) Int. Cl.: A47B 47/04, F16B 12/46, A47B 96/20, A47B 47/00

(54) **Method and device for making a vertical modular structure with extruded sections**

(30) Priority: 22.06.2000 IT PI000044
(71) Applicant: Manzi, Paolo, 50050 Fucecchio (FI) (IT)
(72) Inventor: Manzi, Paolo, 50050 Fucecchio (FI) (IT)
(74) Representative: Celestino, Marco

(57) **Abstract**

A method for making a vertical modular structure formed by a plurality of shelves and uprights crossing with one another to provide bookshelves, modular shelving, room dividing walls and similar. The modular structure (1) comprises elements or boards of extruded sections, for example in aluminium, accomplishing a plurality of primary uprights (6) arranged vertically; a plurality of primary shelves (7) connected orthogonally to the primary uprights (6) without compenetrating and so that their edges contact each other; a plurality of secondary uprights (8) connected coplanarly with the primary uprights (6) having height equal to the distance between two adjacent primary shelves (7) between which they are inserted; a plurality of secondary shelves (9) connected with the primary shelves (7) having length equal to the distance between the two adjacent primary uprights (7) between which they are inserted. Junction elements are provided for joining the primary uprights (6) and the primary shelves (7) orthogonally to each other. The structure provides an upright (6+8) or a shelf (7+9) made by coupling at least two section boards (6,8; 7,9), whereby each upright or shelf is formed by at least said two boards that are coplanar and assembled engaging longitudinally.

## Description

### Field of the invention

The invention described below refers to a method for making a vertical modular structure, having function for example of bookshelves, wall shelving or room dividing wall.

The invention is also referred to obtaining a modular structure for such uses.

Furthermore the invention relates to a releasable locking device that allows to carry out this method and in particular for keeping together the many elements of the structure.

### Description of the prior art

The need of furniture having composed elements is felt that allows the customers to choose a preferred composition as well as to change it after that they have been purchased and installed it a first time.

A wide selection of such furniture, such as bookshelves, modular shelving and the like, is available on the market made of traditional wood (walnut-tree, cherry-tree) and derivatives of the same (fibreboards, MDF). They have, however, complicated construction and aesthetic imperfections like holes, fastenings etc., that negatively affect the aspect of the final product.

Furthermore, bookshelves and other modular shelving exist made of extruded aluminium sections, which have a structural stiffness and low size variation flexibility. In fact, it is not possible to provide a modular composition of single elements that make them up arranged in a vertical and horizontal direction in which variable shapes and surfaces are obtained at the choice of the user.

### Summary of the invention

It is therefore object of the present invention to provide a method for making a vertical modular structure formed by uprights and shelves that cross one another orthogonally and that has not the drawbacks of the known systems allowing, instead, a totally free composition of the structure same.

It is furthermore object of the invention to provide a modular structure that carries out this method.

It is a particular object of the invention to provide a releasable locking device for the primary elements of this modular structure.

In the adjacent description reference is made to one embodiment of a modular structure, being it clear that this method can be extended to other bookshelves, modular shelving, room dividing walls and the like.

The structure is based on a method of making an upright or a shelf by coupling at least two section boards to each other, whereby each upright or shelf is formed by at least said two boards that are coplanar and engaging longitudinally.

Furthermore, the coupling and fastening is provided of two series of primary boards orthogonal to each other, which give rise to uprights and shelves and create the skeleton of the structure.

In particular the structure comprises the adjacent elements:
- a plurality of primary uprights and secondary;
- a plurality of primary and secondary shelves ;
- junction elements for joining the primary uprights and shelves according to the orthogonal planes;
- coupling means for joining the secondary uprights to the primary uprights and the secondary shelves to the primary shelves so that they are respectively coplanar and form together the final uprights and the shelves of said structure, whereby a structure is obtained stable and solid.

The primary uprights and shelves can be continuous for all the height or length of the structure. Every secondary upright has height equal to the distance between the two adjacent primary shelves between which it is inserted, whereas every secondary shelf has length equal to the distance between two primary uprights between which it is inserted.

The junction elements are preferably releasably locked and disappear within the structure. The locking action can be obtained by means of plug protrusions integrated in the junction elements.

The primary uprights and shelves have a cross section profiled in such a way to form on one longitudinal edge a channel of introduction of the junction elements, that disappear within the structure, and provide inner abutments for containing the plug protrusions. Furthermore the opening of the channel allows an engagement in cooperation with the respective secondary uprights or shelves. For this reason, the secondary uprights have a profile that allows a click or positive engagement with the channel of the respective primary uprights, whereas the secondary shelves have a profile that allows a click engagement with the respective primary shelves.

The junction element provide two bar portions orthogonal to each other. Each bar portion has at least one plug protrusion movable between a first position wherein it disappears in the surface of the bar portion same and a second position wherein it protrudes from the surface of the bar portion same. By engaging a bar portion of the junction element in the channel of a primary upright, the rotation of the or each relative plug protrusion causes the lock of the bar portion same in the channel. By engaging then the other bar portion of the same junction element in the channel of a primary shelf and then locking the or each relative plug protrusion, that bar portion is locked in the channel and locks the primary upright to the primary shelf in orthogonal position.

After having connected to each other the primary uprights and shelves the secondary uprights can be mounted and finally the secondary shelves .

Alternatively, the primary uprights can be first assembled to the secondary uprights and to the junction elements. In this case, such complex uprights can be directly provided to the user already assembled in order to only combine it to the primary shelves, block the junction elements and mount the secondary shelves.

The user, at the moment of the purchase can choose freely the height of the shelves and the distances between the uprights according to his needs or preferences. Then, they can be arranged at modular distances between the uprights, in order to obtain lengths of the secondary shelves and distances between the uprights multiple of this modular distances.

The junction elements can also be slidably mounted in the primary uprights. In this case, the vertical bar portion of the junction elements or junction means has prismatic shape and has not locking plug protrusions; therefore, a free sliding is allowed of the junction elements up to resting on the secondary uprights arranged underneath.

Furthermore a vertical modular structure can be made that has the function of room dividing wall. In this case, an upright or a shelf may be made by coupling at least three section boards, whereby each upright or shelf is formed by at least three plane boards united longitudinally.

Finally, the sections of the structure are designed in such a way that they can be made by cutting extruded section bars.

### Brief description of the drawings

Further characteristics of the structure according to the present invention, will be made clearer with the following description of an embodiment thereof, exemplifying but not limitative, with reference to the attached drawings, wherein:
- figure 1 shows a diagrammatical elevational view of a vertical modular structure according to the invention;
- figures 2A, 2B, 2C, 2D and 2E show a cross sectional enlarged view of the different types of sections that carry out the structure according to the invention;
- figure 3A shows a locking step of a junction element to a primary upright;
- figure 3B shows a click fastening step of a secondary shelf or upright to a primary shelf or upright;
- figure 3C shows the slidable engagement of a secondary upright with a primary upright;
- figures from 4A to 4C show stoppers for closing the end of the secondary uprights, figure 4D shows a double stopping element with feet for the ends of the uprights and figure 4E shows a cross section of an auxiliary spacer for mounting the secondary uprights to the primary uprights;
- figures from 5A to 5C show according to the three orthogonal views a junction element according to the invention, for joining the primary uprights to the primary shelves;

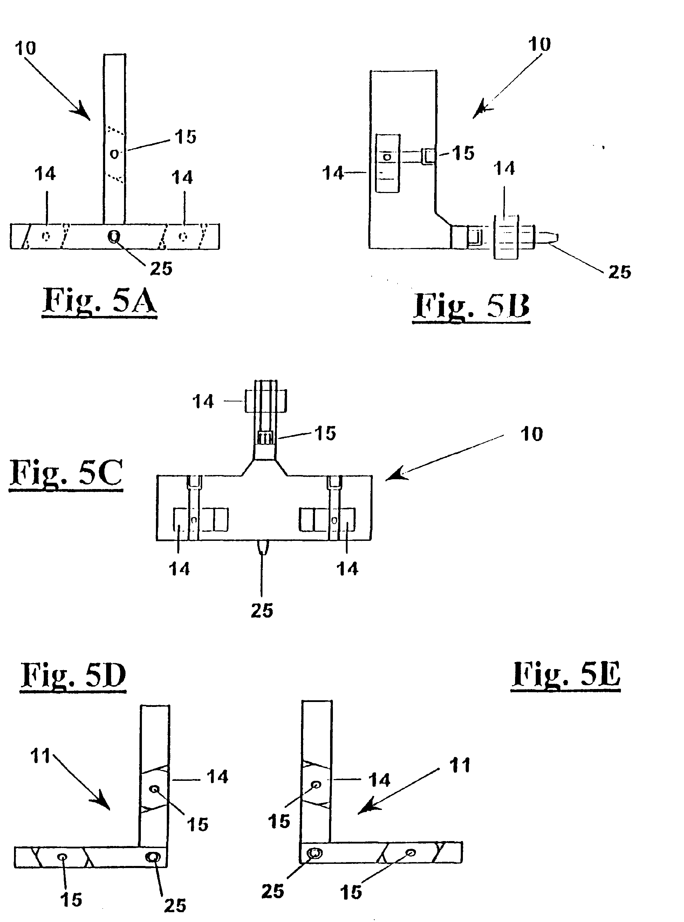

- figures 5D and 5E show side junction elements right and left similar to that of figures from 5A to 5C;

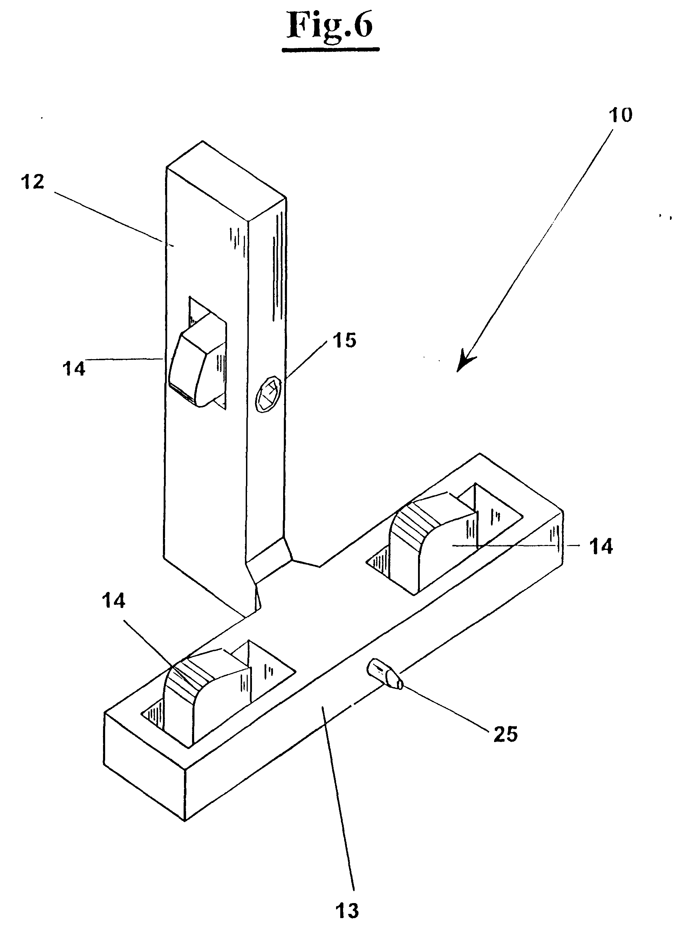

- figure 6 shows a perspective view of the junction element of figures from 5A to 5C;

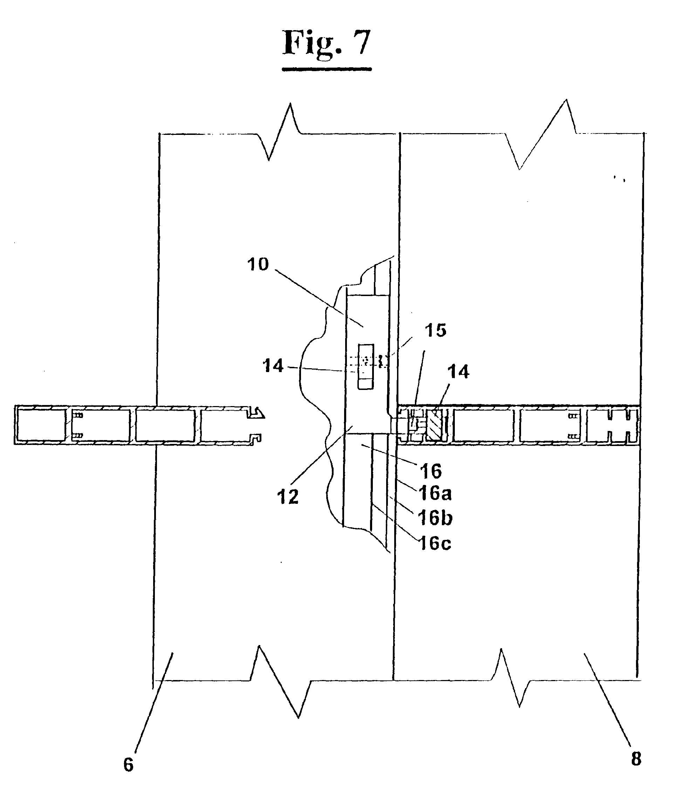

- figure 7 shows a partial elevational view partially cross sectioned of a structure according to the invention in a assembling step of the secondary shelves to the primary shelves, and of fastening the latter to the primary uprights;

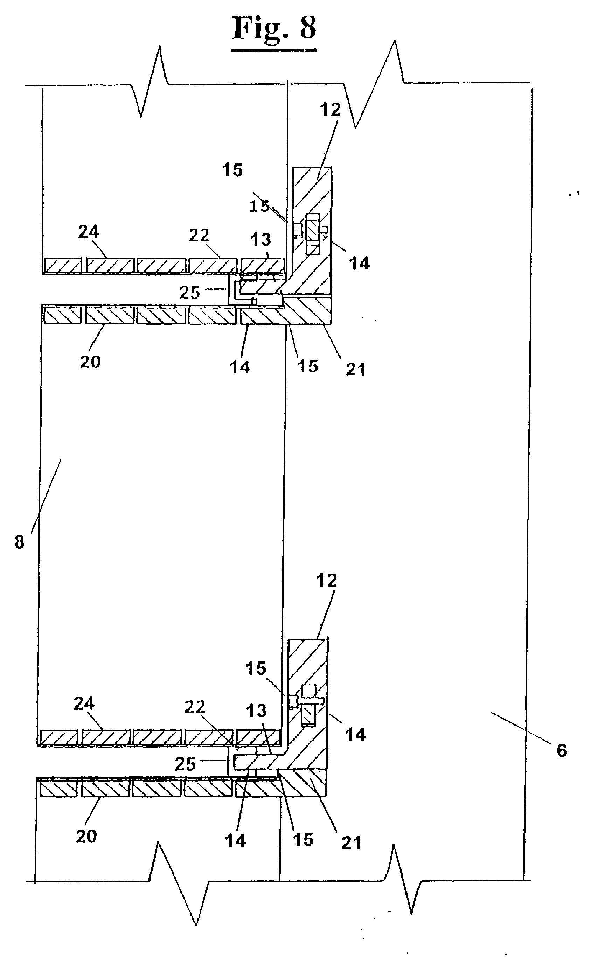

- figure 8 shows a partial elevational view partially cross sectioned of a structure according to the invention in an assembling step of the secondary uprights to the primary uprights and of the introduction of the junction elements and of the stoppers;
- figures from 9A to 9G show successive assembling steps a modular structure according to the invention;

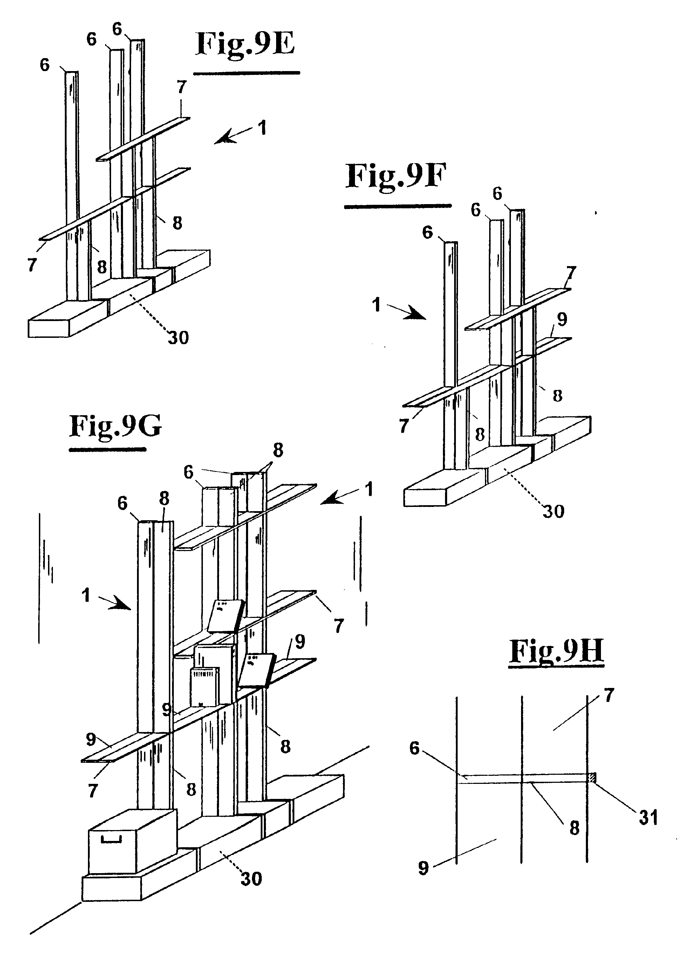

- figure 9H show a top plan view of a step of application of a side end element for secondary uprights.

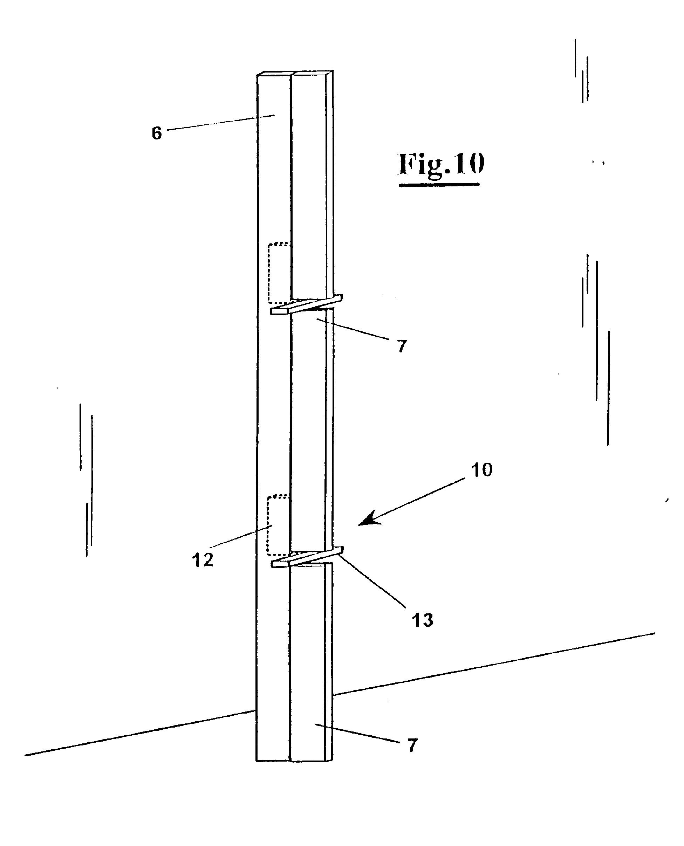

- figure 10 shows a complete already assembled with primary upright, secondary uprights and junction elements;

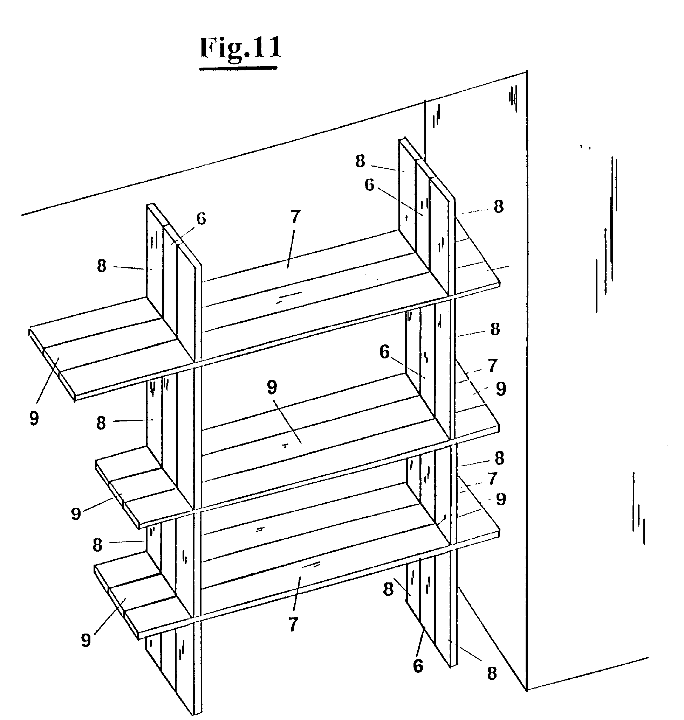

- figure 11 shows a modular structure according to the invention with three series of boards to obtain uprights and shelves, that can be used as room dividing wall.

### Description of a preferred embodiment

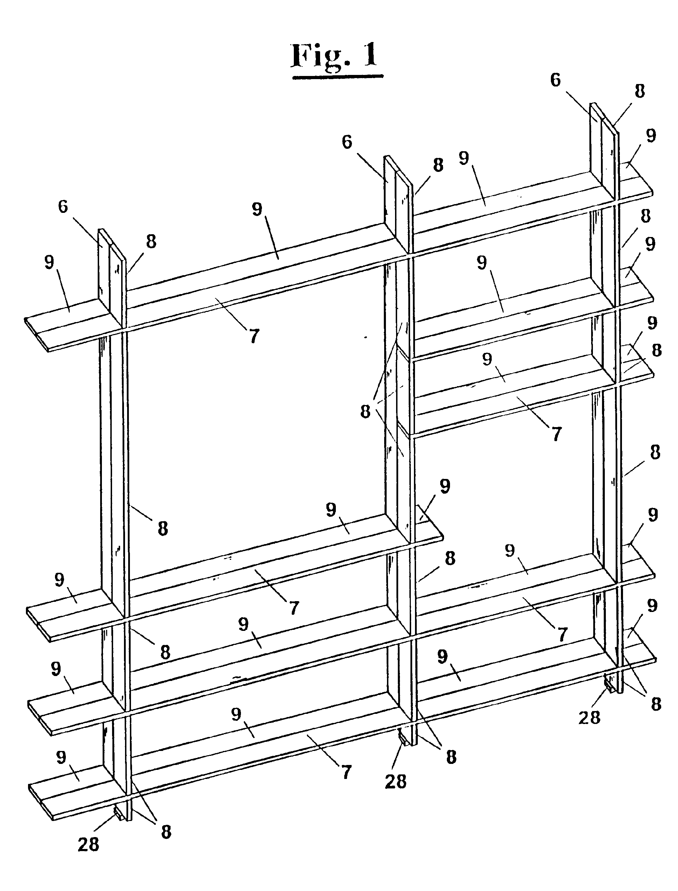

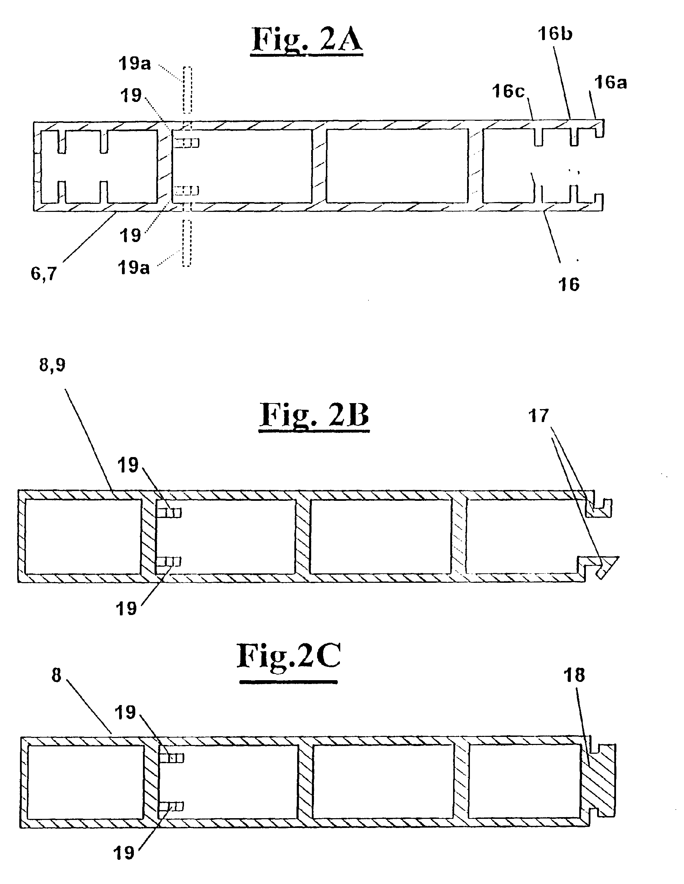

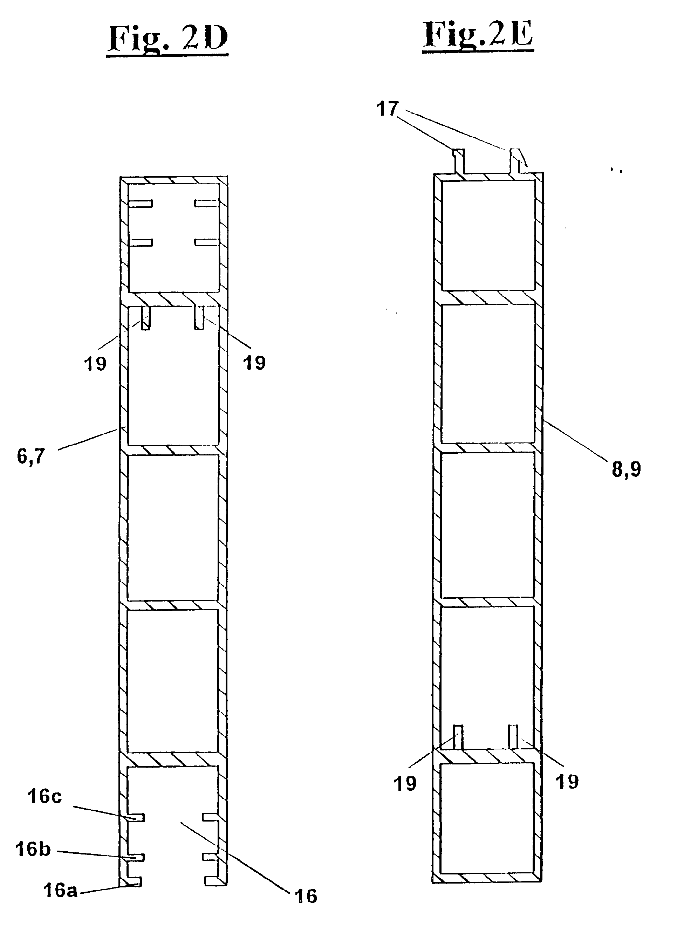

With reference to figure 1 for making the vertical modular structure 1, elements or boards are provided made of extruded sections, for example of aluminium, shown in figures 2A-2E. The sections of figures 2D and 2E are designed with an additional inner room with respect to the sections of figures 2A, 2B and 2C, for wider widths.

More precisely, the structure 1 comprises the following elements:
- a plurality of primary uprights 6 shown in cross section in figure 2A arranged vertically;
- a plurality of primary shelves 7 shown in cross section always in figure 2A and connected orthogonally to primary uprights 6 without compenetrating and so that their edges contact each other;
- a plurality of secondary uprights 8 connected coplanarly to primary uprights 6 and shown in cross section in figure 2B or 2C; secondary uprights 8 have height equal to the distance between the two adjacent primary shelves 7 between which they are inserted.
- a plurality of secondary shelves 9 connected with the primary shelves 7 and shown in cross section in figure 2B; the secondary shelves 9 have length equal to the distance between two adjacent primary uprights 7 between which they are inserted.

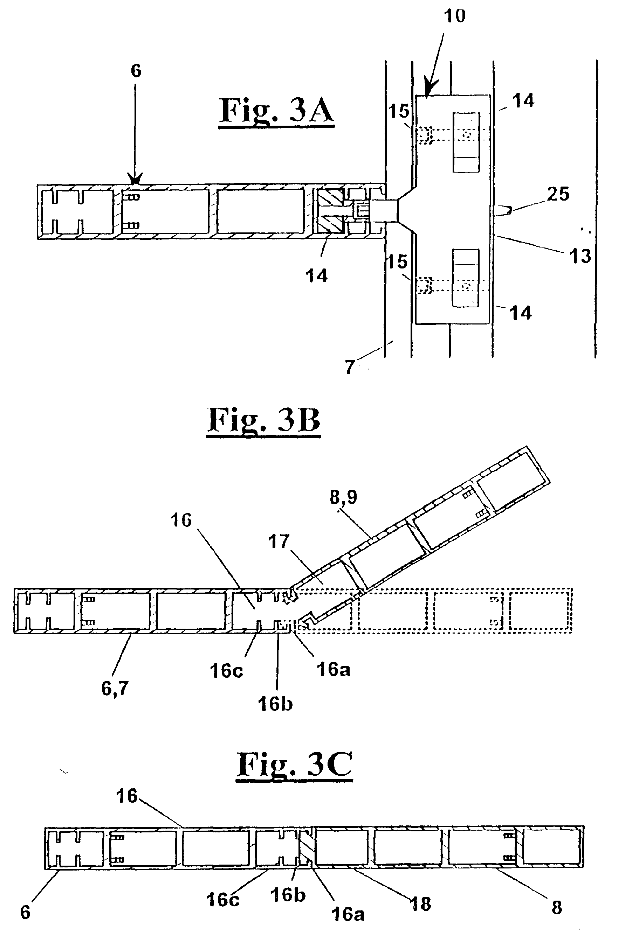

With reference to figure 3A, junction elements 10 are provided for joining primary uprights 6 and the primary shelves 7 orthogonally to each other. More precisely, the sections of figures 2A have a channel 16 having longitudinal inner teeth 16a, 16b and 16c for locking junction elements 10 or for coupling with other elements.

Junction elements 10 are shown in more detail in figures 5A-5C and in figure 6. In particular, junction element 10 consists in at least two bar portions 12 and 13 orthogonal to each other. Each bar portion has at least one plug protrusion 14 movable between a first position wherein it disappears within bar portion 12 and a second position wherein it protrudes from the surface of bar portion 12. By operating manually with a rotational movement each plug protrusion 14, by means of special spanners 15, such as for Allen screws, the junction element 10 is locked to primary upright 6. In particular, the plug protrusion 14 is rotated by means of pin 15 after having passed tooth 16c. In said position, the back movement of the bar portion 12 from channel 16 is blocked. For bar portion 13 the same procedure is followed. Normally, bar portion 12 engages channel 16 of a primary upright and bar portion 13 engages channel 16 of a primary shelf.

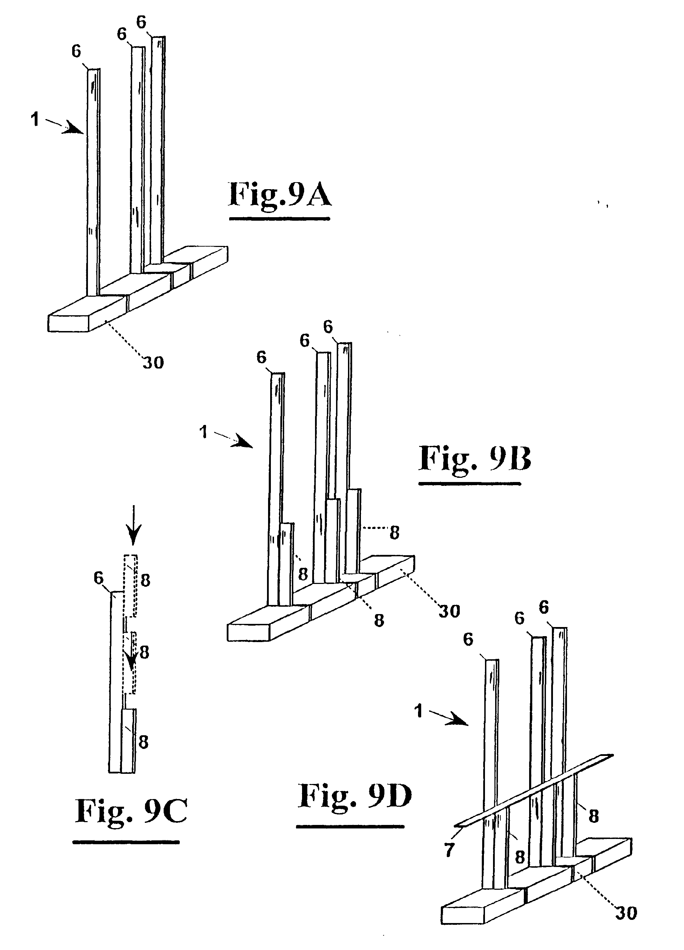

As shown in figures 2B and 2C, a click coupling profile 17 or a prismatic coupling profile 18 is provided for joining secondary uprights 8 to primary uprights 6. In this case, after having at first connected at least one primary upright 6, a secondary upright 8 is inserted as shown in cross section in figures 3B or 3C and in a perspective view in figures 9A-9B.

The sections of figures 2A-2E have inner ridges 19 of support of possible pins 19a (figure 2A) to be applied when necessary when they are used for supporting movable shelves or uprights for reinforcing the secondary shelves, providing a local drilling step. In the first case, the movable shelves are held by pins that protrude from holes previously made at predetermined on the uprights.

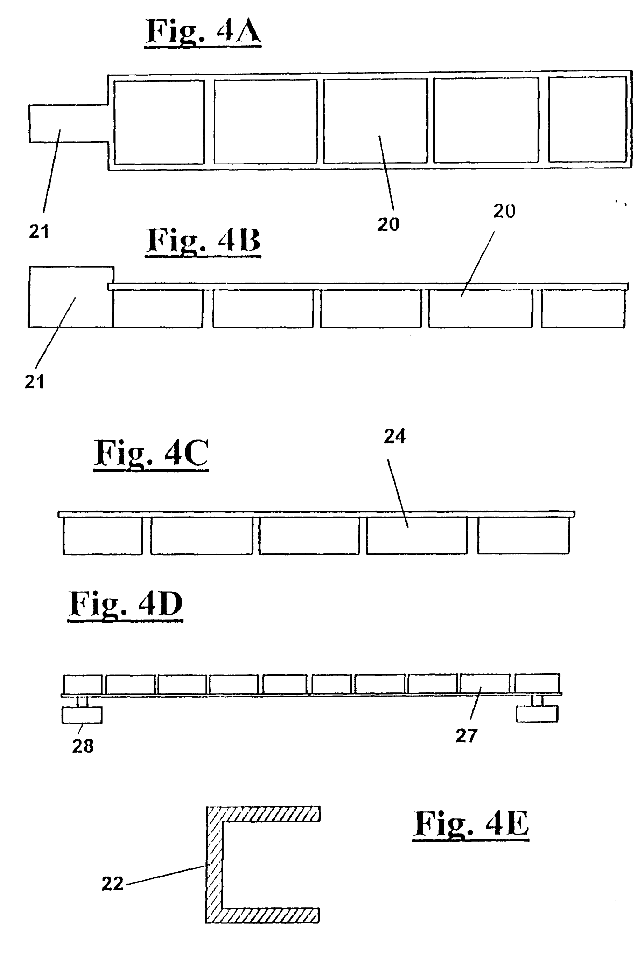

As from figure 8, end stoppers 20 and 24 are provided, shown alone in figures 4A,4B and 4C, for engaging with the ends of the sections. Such stoppers can be fixed to the sections of figures 2D and 2E, but can be made of different shape to adapt to different sections as those of figures 2A-2C.

The stopper 27 of figure 4D is double and provides two adjustable height feet 28 to be used at the bottom.

To strengthen the coupling of primary upright 6 to secondary upright 8 as shown in figure 3B or 3C, bottom stoppers 20 of figures 4A-4B have an extension 21, suitable for engaging with channel 16 of primary upright 6. The extension fits in channel 16 of primary upright 6, preventing flectional fluctuations and then the release.

Furthermore it has the function of abutment for junction elements 10 in its vertical displacement before being blocked.

Furthermore the possible use of a "C" shaped spacer 22 can be provided, shown in cross section in figure 4E, for precisely fastening the secondary uprights and the junction elements. Such spacer 22 is then removed at the moment of arranging primary shelf 7.

With reference to figures 9A-9G, possible assembling steps provide at first arranging primary uprights 6, (figure 9A) for example on a base frame 30. Then, the introduction of secondary uprights 8 (figure 9B) is accomplished in the way shown diagrammatically in figure 9C and in figure 3C, or alternatively with the click engagement of figures 3B. Then (figure 9D), a primary shelf 7 is mounted. Proceeding towards the above further secondary uprights 8 and primary shelves 7 (figure 9E) are added. Finally, the secondary shelves 9 are connected to the primary shelf 7 with the click engagement of figure 3B and figure 7.

Finally, the final structure like bookshelves 1, modular shelving or the like is linear and clean aesthetically; in fact the uprights and the shelves, except from coupling lines, do not have any protrusion. With reference to figure 9H, it is possible to apply front covers indicated with 31.

As shown in figure 10 a pre-assembled complete upright equipped with primary upright, secondary uprights and junction elements can be provided.

Finally, as shown in figure 11, the modular structure according to the invention can provide three series of boards to obtain the uprights and the shelves, that can be used as room dividing wall at a height lower than the ceiling or as walls, up to the height of the ceiling.

The structure according to the invention can be used as bookshelves, modular shelving or room dividing wall with or without background or closure boards. In case background boards are used, their application is possible fastening it to the primary uprights and to the secondary shelves of figure 1 or figure 9G. The background boards can be fastened in many ways, for example by screws, or can have plug protrusions or click plugs engaging with the channels provided specially on the rear of the primary uprights or of the secondary shelves .

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for making a vertical modular structure, said structure being formed by a plurality of shelves and uprights crossing one another to provide bookshelves, modular shelving, room dividing walls and the like, **characterised in that** an upright or a shelf is made by coplanarly coupling at least two section boards to each other, whereby each upright or shelf is formed by at least said two boards that are assembled engaging longitudinally with each other.

2. Method according to claim 1, **characterised in that** it comprises the steps of:
- forming at least one primary upright and at least one primary shelf having a first cross section profiled in such a way to have a channel on one longitudinal edge ;
- forming uprights or secondary shelves by means of a second profiled cross section,
- forming junction elements extending towards at least two directions orthogonal to each other;
- coupling by means of said junction elements said at least one upright and said at least one primary shelf according to two orthogonal planes,
- coupling and locking said uprights and secondary shelves respectively to said uprights and primary shelves by means of sliding or click engagement.

3. Method according to claim 2, wherein said coupling and locking step of said secondary uprights to said primary uprights provides the application of unlock-preventing stoppers that engage with said channels.

4. Method according to claim 2, wherein said junction elements are quickly releasably locked in said channels.

5. Method according to claim 2, wherein said uprights and secondary shelves are cut according to height and length equal to the distance respectively between two adjacent primary shelves and between two adjacent primary uprights.

6. Vertical modular structure **characterised in that** it comprises:
- a plurality of primary and secondary uprights;
- a plurality of primary and secondary shelves ;
- junction means for joining to each other the primary uprights and shelves according to orthogonal planes;
- coupling means for joining the secondary uprights to the primary uprights and the secondary shelves to the primary shelves so that they are respectively coplanar and form together the final uprights and shelves of said structure, whereby a structure is obtained stable and solid.

7. Structure according to claim 6 wherein said primary and secondary uprights or primary and secondary shelves have cross section profiled in such a way to form on one longitudinal edge a channel of introduction of said junction elements.

8. Structure according to claim 6 wherein said uprights and primary shelves are continuous for all the height or length of said modular structure.

9. Structure according to claim 6 wherein said secondary uprights are joined to the primary uprights with the aid of rigid stoppers that prevent from a mutual disengagement.

10. Structure according to claim 6 wherein each secondary upright has length equal to the distance between two adjacent primary shelves between which said secondary upright is inserted, and wherein each secondary shelf has length equal to the distance between two adjacent primary uprights between which said secondary shelf is inserted.

11. Structure according to claim 6 wherein said junction elements consist in at least two bar portions orthogonal to each other united in a zone of contact without compenetrating.

12. Structure according to claim 11 wherein every bar portion of said junction element comprises at least one plug protrusion movable between a first position wherein said plug protrusion disappears in the surface of said bar portion and a second position wherein said plug protrusion protrudes from the surface of said bar portion, in said first position said plug protrusion not blocking the free engagement of said bar portion in said channel, in said second position said plug protrusion being suitable for engaging with the channel of a primary upright or shelf wherein said bar portion same is inserted, whereby a back movement of said bar portion from said channel is blocked.
